(19) Europäisches Patentamt

European Patent Office

Office européen des brevets

(11) **EP 0 941 668 A1**

(12) **EUROPEAN PATENT APPLICATION**
published in accordance with Art. 158(3) EPC

(43) Date of publication:
15.09.1999 Bulletin 1999/37

(51) Int. Cl.$^6$: **A23G 9/00**

(21) Application number: 97944142.5

(86) International application number:
PCT/JP97/03738

(22) Date of filing: 16.10.1997

(87) International publication number:
WO 98/16120 (23.04.1998 Gazette 1998/16)

(84) Designated Contracting States:
**DE ES FR GB IT**

(30) Priority: **16.10.1996 JP 29313196**
**21.10.1996 JP 29707696**
**21.10.1996 JP 29707796**

(71) Applicant:
**Nikken Chemicals Company, Limited**
**Tokyo 104 (JP)**

(72) Inventors:
• **HAYASHI, Kaoru,**
**Nikken Chem Co Ltd Omiya Res lab**
**Omiya-shi Saitama 330 (JP)**
• **KOHNO, Hiroyuki,**
**Nikken Fine Chem. Co. Ltd.**
**Chita-shi Aichi 478 (JP)**
• **NAKASHIMA, Kyoko,**
**Nikken Fine Chemicals Co., Ltd.**
**Chita-shi Aichi 478 (JP)**
• **URAJI, Tatsuya,**
**Nikken Fine Chemicals Co., Ltd.**
**Chita-shi Aichi 478 (JP)**

(74) Representative:
**VOSSIUS & PARTNER**
**Siebertstrasse 4**
**81675 München (DE)**

Remarks:
A request for correction of the description has been filed pursuant to Rule 88 EPC. A decision will be taken during the proceedings before the Examining Division.

(54) **SHERBETS AND PROCESSES FOR THE PRODUCTION THEREOF**

(57) The first aspect of the present invention relates to a sherbet which contains erythritol and provides a soft mouthfeel and also to a process for producing it.

The second aspect of the present invention relates to an erythritol-containing alcoholic soft sherbet to be served as a soft ice-like frozen alcoholic beverage and a process for producing it and also to a solution as a raw material from which the erythritol-containing alcoholic soft sherbet is produced.

According to the first aspect of the present invention, even if erythritol is used, the hardness of frozen sherbet does not increase. As a result, there can be obtained a sherbet that has a low calorific value and a soft mouthfeel even it is readily spooned as soon as it is taken out of the freezer.

The erythritol-containing alcoholic soft sherbet according to the second aspect of the present invention has a low calorific value, a low degree of sweetness, and a low sugar content, and it is served to eat and drink as a soft ice-like frozen alcoholic beverage in the form of soft ice which can be made in the freezing compartment of a home refrigerator.

EP 0 941 668 A1

## Description

### Technical Field

The present invention relates to a sherbet and a process for the production thereof, and are particularly, to an erythritol-containing sherbet and a process for the production thereof.

The present invention may be broadly classified into two aspects both of which relate to an erythritol-containing soft sherbet.

That is, the first aspect of the present invention relates to an erythritol-containing soft sherbet and a process for the production thereof, which are described in Claims 1 to 17.

Next, the second aspect of the present invention relates to an erythritol-containing alcoholic soft sherbet to be served as a soft ice-like frozen alcoholic beverage and a process for the production thereof and also relates to an aqueous solution as a raw material from which the erythritol-containing alcoholic soft sherbet is made, which are described in Claims 18 to 31.

Accordingly, descriptions will be made of two aspects of the present invention separately.

### Background Art

(First aspect of the invention)

To start with, the first aspect of the invention is explained in the following.

As mentioned above, the first aspect of the present invention relates to an erythritol-containing soft sherbet and a process for the production thereof.

Erythritol is a sugar alcohol that is used as a sweetener for confectionery, beverages, and foods. Having no calorific value, it especially finds use as a sweetener for dietetic foods. In addition, it is expected to find use not only as a sweetener for ordinary foods but also as a sweetener for diabetics and other patients suffering from derangement of carbohydrate metabolism who cannot assimilate saccharide such as sucrose and glucose.

For this reason, there has been proposed using erythritol for a sherbet as a dietetic food with reduced calorific values or a sherbet for diabetics. Unfortunately, there has been a prevalent belief that sherbet that contains erythritol in place of sucrose or glucose is too hard to spoon and hence erythritol is not suitable as a sweetener for sherbet.

As for a sherbet containing erythritol, Japanese Patent Publication No. Hei 7-100013 discloses that erythritol can be used as a sweetener for dessert such as sherbet. However, it does not disclose nothing in particular about the production process.

The present inventors' experiments in sherbet production in the usual way, with erythritol in place of sucrose (as a sweetener), confirmed that the hardness upon freeze becomes higher. More specifically, it was confirmed that the resulting sherbet remains too hard to spoon and therefore to eat for a while after it has been taken out of a freezer because the sherbet mix freezes rapidly during cooled agitation for whipping air into the sherbet, so that it does not contain air sufficiently therein.

Japanese Patent Application Laid-open No. Hei 6-70689 discloses a process for making a soft frozen dessert by whipping air into a syrup containing sugar, foaming agent, and foam stabilizer, mixing the resulting whipped syrup with ice, and performing further whipping air into syrup. For the resulting product to be soft, this process needs the steps of whipping air into syrup, mixing the whipped syrup with ice, and performing further whipping air into syrup. The air content (or overrun) in the ice-syrup mixture is 20-100%. The problem with this process is complexity, with necessity to carry out whipping air into syrup twice, to prepare ice for addition to syrup, and to perform separately a process of whipping air into syrup and a process of allowing ice crystals to grow.

Japanese Patent Application Laid-open No. Hei 4-23952 discloses a coating material for frozen desserts, which contains gelatin and sugar alcohol. This coating material is, however, for the purpose of coating the surface of frozen desserts such as ice cream and sherbet, and when the amount of gelatin contained in the coating material is increased to 5-15 wt%, jelly mouthfeel can be imparted. The gelatin and sugar alcohol are not used as raw material of sherbet itself.

It is an object of a first aspect of the present invention to provide an erythritol-containing sherbet and a process for the production thereof, in which the sherbet contains erythritol as a sweetener so that it has a greatly reduced calorific value unlike conventional sherbets. It is further object to provide an erythritol-containing soft sherbet having a soft mouthfeel and a process for the production thereof, in which the sherbet is readily spooned as soon as it is taken out of a freezer.

(Second aspect of the invention)

Next, the second aspect of the invention is explained in the following.

The second aspect of the invention relates to an erythritol-containing alcoholic soft sherbet that has a low calorific value and can be frozen simply in the freezing compartment of an ordinary home refrigerator to be in a soft-ice-cream-like state, which is capable of enjoying and tasting as a frozen alcoholic beverage resembling soft ice, and the process for the production thereof, and also to an aqueous solution as the raw material from which the erythritol-containing alcoholic soft sherbet is made. Here enjoying and tasting have a concept of eating and drinking.

There have been proposed a variety of frozen alcoholic beverages (so-called frozen cocktails) produced by freezing alcoholic beverages such as cocktails.

For example, Japanese Patent Application Laid-open No. Hei 8-70810 discloses a process for producing a sherbet containing plum extract obtained from "plum liqueur."

According to this invention, there is a description that it yields a sherbet having a good flavor and a good mouthfeel with an adequate viscosity.

However, what it actually yields is not the soft ice-like frozen alcoholic beverage intended by the present invention but is a rather hard sherbet obtained by simple freezing without attention to reduction in the hardness upon freezing.

Then, Japanese Patent Publication No. Hei 7-77553 discloses a process for making a sherbet-like frozen beverage.

According to this invention, there is a description that the production of a frozen beverage with a low sugar content (less than ca. 15°) and a low alcohol concentration (less than ca. 10°) in the form of sherbet with adequate squeezability.

The process of this invention consists of steps of cutting ice blocks into small pieces or granules, cooling the alcoholic beverage below the freezing point, and uniformly mixing the cooled alcoholic beverage with the cut ice pieces at an atmosphere of a temperature lower than the freezing point of the alcoholic beverage, thereby forming a frozen layer of the cooled alcoholic beverage on the surface of and between the interstices of said cut ice pieces. That beverage requiring such complex steps is far remote from the beverage of the present invention which is made by simply freezing a liquid alcoholic beverage in the freezing compartment of an ordinary home refrigerator.

Incidentally, several frozen alcoholic beverages (or frozen cocktails) are commercially available. For example, commercial frozen strawberry daiquiri or frozen melon daiquiri contains about 8% alcohol but contains total saccharides as high as about 28% so that it resembles soft ice. Thus, they are calorific as well as sweet. On the other hand, commercial frozen margarita contains total saccharides in a reduced amount of about 23%, avoiding the problem of being sugary, but contains about 10% alcohol (which is higher than that (4-8%) of commercial cocktail beverages) accompanied with a high calorific value, the problem remained unresolved.

Moreover, Japanese Patent Application Laid-open No. Sho 63-160572 discloses a frozen alcoholic beverage which is prepared by freezing an alcoholic beverage composed of water, sugar, alcohol, flavor, and carboxymethylcellulose in a freezer to be in a soft ice state and is stored as such until it is served.

This frozen alcoholic beverage has no problem with sweetness in view of its Brix degree ranging from ca. 15° to ca. 28°, preferably from ca. 18° to ca. 25°. On the other hand, it contains as much alcohol as 15-20wt% in order to keep a soft ice state. Because of its higher alcohol concentration compared with, not to mention commercial cocktails (4-8% alcoholic concentration), commercial frozen cocktails (with about 8-10 wt% alcohol), it is unpalatable and calorifacient.

The sugar concentration and alcohol concentration affect the freeze hardness in a contradictory manner. Reducing the sugar concentration to lessen sweetness ends up with an increase in freeze hardness which prevents the formation of products in a soft ice state. Any attempt to reduce the freeze hardness requires an increase in alcohol concentration which results in unpalatable high-calorie products. Reducing the alcohol concentration while keeping the sugar concentration high leads to low freeze hardness contributing to the soft ice state at the expense of increase in calorific value and sweetness.

As a matter of fact, there has not been obtained so far any frozen alcoholic beverage with low calorie in a soft ice state, particularly the one in a soft ice state which has a moderate alcohol concentration and a low sugar concentration for low calorie.

Under these circumstances, there is a demand for the development of a frozen alcoholic beverage which has a low degree of freeze hardness, takes on a soft ice state, and is of low calorie, particularly the one which is comparatively low in alcohol concentration and is in the form of soft ice with low freeze hardness and with low calorie and further is ready for enjoying and tasting after simple freezing in the freezing compartment of a home refrigerator.

Addressing this problem is an object of the second aspect of the present invention.

It is known that the concentration of alcohol and saccharides in a frozen alcoholic beverage has a profound effect on freezing and freezability. An increase in their concentration lowers the freezing point and prevents the growth of ice crystals. Particularly, an increase in saccharide concentration leads to smaller ice crystals.

Consequently, for a frozen alcoholic beverage to assume a soft ice state by freezing in the freezer compartment of a home refrigerator, it should have a comparatively high saccharide concentration and an adequate alcohol concentration corresponding to it.

Unfortunately, as mentioned above, if the alcohol concentration is maintained at an adequately low level, it is necessary to increase the saccharide concentration to some extent so that the frozen alcoholic beverage assumes a soft ice state with low freeze hardness. This poses a problem of high calorie.

In order to address the foregoing problem, the present inventors carried out a series of researches which led to the finding that it is possible to lower freeze hardness while reducing the calorific value by employing at least a sugar alcohol as the saccharide for a soft ice-like frozen alcoholic beverage. Because a sugar alcohol is less sweet than sucrose and isomerized sugar, it was further found that the beverage containing it is moderately sweet and palatable.

It is known that there is a positive correlation between the freeze hardness of a frozen alcoholic beverage and the difference between its freezing point and its freeze storage temperature. In other words, it is known that a frozen alcoholic beverage becomes softer as its freezing point approaches its freeze storage temperature (or as their difference decreases).

In addition, it has also been found that the higher ice fraction (for the same solvent) becomes, the higher the freeze hardness becomes, and the higher the molecular weight and solubility of the used saccharific solute (sugar and sugar alcohol) becomes, the higher the freeze hardness becomes. In other words, the lower the molecular weight of the solute becomes, the lower the freeze hardness becomes.

This implies that the freeze hardness depends heavily on kinds of saccharide, concentration, molecular weight, and solubility. These factors determine ice fraction, freezing point, glass transition point, and viscosity in that part of solution which has been frozen and concentrated. The overall results thereof manifest themselves in freeze hardness.

The above-mentioned findings are the basis for the selection of erythritol as a desirable sugar alcohol from among low-molecular weight saccharides.

Incidentally, erythritol has never been used for alcoholic beverages.

Having a low molecular weight, in spite of having less sweetness than saccharide and thus having the effect of low saccharide concentration, erythritol lowers the freezing point of its aqueous solution with a less amount (hence with a lower degree of sweetness), resulting in lower freeze hardness. In other words, erythritol reduces the freezing point much more than sucrose if the sugar concentration and sweetness are the same.

Incidentally, it was found that xylitol lowers the freezing point and freeze hardness when used in a less amount than sucrose because it has a lower molecular weight than sucrose although it is as sweet as sucrose. In other words, xylitol lowers the freezing point more than sucrose for the same sugar concentration. This permits its use in combination with erythritol.

The fact that erythritol has a zero calorific value and xylitol has a calorific value lower than that of other saccharides (such as sucrose) by about 25% contributes to low-calorie alcoholic beverages.

The second aspect of the present invention is based on these findings. It is intended to provide an erythritol-containing alcoholic soft sherbet to be served as a soft ice-like frozen alcoholic beverage which has a low calorific value and a low degree of freeze hardness owing to the use of reduced amount of alcohol (within a certain range of alcohol concentration) and the use of sugar alcohol (including at least erythritol) as saccharide. It is also intended to provide a process for producing an erythritol-containing alcoholic soft sherbet to be served as a soft ice-like frozen alcoholic beverage by simple freezing in the freezing compartment in a home refrigerator without necessity for complex steps. It is also intended to provide an aqueous solution as a raw material from which the erythritol-containing alcoholic soft sherbet is made.

Disclosure of the Invention

(The first aspect of the invention)

In order to address the above-mentioned problem, the present inventors carried out a series of researches which led to the finding that a sherbet containing erythritol as a sweetener has a soft mouthfeel if it undergoes overrun on a sherbet mix in a range of 50 to 130% and that the desired overrun can be accomplished by the conventional freezing technique without necessity for special steps, if a foam stabilizer is incorporated with a sherbet mix containing erythritol.

The gist of the first aspect of the present invention resides in a sherbet which contains erythritol and provides a soft mouthfeel as defined in Claim 1, a process for producing a sherbet which comprises stirring a sherbet mix composed of water, erythritol, and gelatin or pectin as a foam stabilizer for whipping air into syrup with cooling until overrun reaches 60-110%, thereby causing ice crystals to separate out as defined in Claim 11, and a process for producing a sherbet which comprises stirring a sherbet mix composed of water, erythritol, at least one member selected from the group consisting of sugar, sugar alcohol, and polydextrose, and egg white as a foam stabilizer for whipping air into syrup with cooling until overrun reaches 50-90%, thereby causing ice crystals to separate out as defined in Claim 16. The sherbet defined in Claim 1 can be produced basically by the process defined in Claim 11 or Claim 16.

(The second aspect of the present invention)

The second aspect of the present invention is intended to provide an erythritol-containing alcoholic sherbet which is served as a soft ice-like frozen alcoholic beverage and a process for producing the same, and to provide a solution as a raw material from which the erythritol-containing alcoholic soft sherbet is made.

More specifically, an object of the present invention is to provide the sherbet according to Claim 1 which is an alcoholic sherbet containing alcohol in an amount from 1 to 18 vol% (w/v), as defined in Claim 18.

Another object of the present invention is to provide a process for producing a sherbet which comprises stirring and mixing together an alcoholic ingredient, erythritol alone or a mixture of erythritol and xylitol, optional saccharides other than erythritol and xylitol, and a thickening and stabilizing agent, and subsequently freezing the resulting mixture, as defined in Claims 24 to 27.

Further another object is to provide an aqueous solution as a raw material from which a sherbet is made, the aqueous solution comprising an alcoholic ingredient, erythritol alone or a mixture of erythritol and xylitol, optional saccharides other than erythritol and xylitol, and a thickening and stabilizing agent, as defined in Claims 28 to 31.

Best Mode for carrying out the Invention

(The first aspect of the invention)

What follows is a detailed description of the first aspect of the present invention.

The gist of the first aspect of the present invention resides in a sherbet that contains erythritol and has a soft mouthfeel as defined in Claim 1 (which has been mentioned above).

The present inventors are the first to develop a sherbet that contains erythritol and has a soft mouthfeel as defined in Claim 1.

The sherbet as defined in Claim 1 can be made efficiently by the process as defined in Claims 11 to 17.

The erythritol is a sugar alcohol of tetrose as a sweetener, and any commercial one is acceptable. It may be used in the form of crystals, powder, or liquid, which is not specifically restricted.

The invention defined in Claim 1 is augmented in Claims 2 and 3 as follows.

In Claim 2, the sherbet defined in Claim 1 is characterized further by erythritol and foam stabilizer contained therein and overrun ranging from 50 to 130%.

In Claim 3, the sherbet defined in Claim 1 is characterized further by erythritol, foam stabilizer, and at least one member selected from the group consisting of sugar, sugar alcohol, and polydextrose contained therein and overrun ranging from 50 to 130%.

Generally, sucrose or the like as a sweetener is used in an amount of 10-35 wt% of the sherbet mix.

In the case where the erythritol as a sweetener is used alone as in Claim 2, the amount of erythritol to be used is equivalent to give sweetness comparable to that of sucrose or the like as a sweetener used in an ordinary sherbet. In general, 10-35 wt% per sherbet mix is used so that the amount may be determined within this range.

The sherbet as defined in Claim 2 contains erythritol alone (100%) as a sweetener so that it is spooned easily, as explained above. The erythritol may be used in combination with any other sweeteners than erythritol.

As a sweetener, there are exemplified by sugar (such as sucrose, glucose, fructose, high fructose corn syrup, palatinose, trehalose, and starch syrup), sugar alcohol (such as glycerin, xylitol, sorbitol, maltitol, lactitol, palatinit, and hydrogenated glucose syrup), oligosaccharide (such as isomaltooligosaccharide, fructooligosaccharide, galactooligosaccharide, xylooligosaccharide, and oligosaccharides), and non-sugar sweeteners (such as aspartame, stevioside, rebaudioside, acesulfame K, glycyrrhizin, thaumatin, and sodium saccharin).

Erythritol is less sweet than sucrose, with a sweetness being about 80% of that of sucrose. Its sweetness may be supplemented by other sweeteners, especially non-sugar sweeteners having a high degree of sweetness, such as aspartame, stevioside, rebaudioside, acesulfame K, glycyrrhizin, thaumatin, and sodium saccharin, mentioned above.

Meanwhile, the sherbet as defined in Claim 3 contains erythritol in combination with at least one member selected from the group consisting of sugar, sugar alcohol, and polydextrose.

Examples of the sugar include those mentioned above. They have an approximate calorific value of 4 kcal/g. Examples of the sugar alcohol include those mentioned above. They have a calorific value of 2 kcal/g, except for glycerin (4 kcal/g) and hydrogenated glucose syrup (2-4 kcal/g). Polydextrose used is commercially available; it has a calorific value of 1 kcal/g.

The sugar, sugar alcohol, and polydextrose may be used alone or in combination with one another. Sucrose, lactitol, or polydextrose is preferable as defined in Claims 7 and 8.

In the case where erythritol as a sweetener is used in combination as in the sherbet defined in claim 3 with at least one member selected from the group consisting of sugar, sugar alcohol, and polydextrose, the amount of erythritol varies depending on other sweeteners used in combination.

When erythritol is used in combination with saccharides, as in claim 9, a preferred amount of erythritol is not less than 50 wt% and less than 100 wt% of total amount of the erythritol and saccharides to have a low calorific value. In the case where erythritol is used in combination with sugar alcohol, polydextrose, or cellulose, a preferred amount of erythritol is not less than 25 wt% and less than 100 wt% of their total amount.

The first aspect of the present invention slightly varies in constituent depending on the kind of foam stabilizer employed.

That is, in the case where the foam stabilizer is gelatin or pectin as in Claims 4 and 5, a preferred overrun is 60-110%. With an overrun of 50-130%, preferably 60-110%, a sherbet mix containing erythritol alone as a sweetener yields a sherbet having a soft mouthfeel by the conventional freezing technique without necessity for special steps.

On the other hand, in the case where the foam stabilizer is egg white as in Claim 6, a preferred overrun is 50-90%.

In said case where egg white is employed as foam stabilizer, a sherbet containing erythritol alone as a sweetener is low in overrun and hence is poor in mouthfeel.

To cope with this, it is necessary for the sherbet to contain erythritol in combination with at least one member selected from the group consisting of sugar, sugar alcohol, and polydextrose. The overrun in this case should sufficiently be from 50% to 90%, 90% of overrun is enough at highest.

Needless to say, the sherbet may contain erythritol in combination with at least one member selected from the group consisting of sugar, sugar alcohol, and polydextrose even in the case where the foam stabilizer is gelatin or pectin as defined in Claim 5.

Incidentally, in either case where the foam stabilizer is gelatin or pectin or where the foam stabilizer is egg white, the foam stabilizer may be used in combination with a polysaccharide thickener (such as carrageenan, guar gum, tamarind gum, pectin, xanthane gum, agar, locust bean gum, gum arabic, and alginic acid) or a protein (such as gelatin, gluten, egg white, and egg white albumin) so long as they do not detract the feature of the present invention, for the purpose of foam stabilizing.

The foam stabilizer should be used in a varied amount depending on its kind; an adequate amount is such as to produce a stable overrun of 50-130% and to give a viscosity high enough for the sherbet mix to be stirred and mixed.

Usually, the foam stabilizer is used in an amount of about 0.05-5 vol% of the sherbet mix. For example, a preferred amount of gelatin is 0.05-2 vol%, particularly 0.4-1 vol% is preferable, and a preferred amount of pectin is 1-3 vol%. When the amount of gelatin exceeds 1 vol% or the amount of pectin exceed 3 vol%, a jelly mouthfeel is imparted to the sherbet more and more respectively as the amount thereof increases, although the resulting sherbet is still acceptable as a frozen dessert.

The egg white used as a foam stabilizer in the sherbet defined in Claim 6 may be raw egg white (left after removal of yolk from whole egg) or commercially available egg white in the form of powder or liquid or egg white albumin. Raw egg white should be used in an amount of about 5-15 vol% of the sherbet mix. With an amount less than 5 vol%, the resulting sherbet is hard and poor in mouthfeel. With an amount more than 15 vol%, the resulting sherbet gives rise to bubbles on its surface, detracting its mouthfeel, as it melts.

The sherbet according to the first aspect of the present invention has its soft mouthfeel enhanced if it is incorporated with alcohol during its production as defined in Claim 10.

Alcohol in an amount less than 1 vol% of the sherbet mix is enough. The alcohol used may be ethyl alcohol. Liqueur or fruit wine is preferable to impart a flavor to the sherbet. When using alcohol for the purpose of imparting a flavor, their amount may exceed 1 vol% in terms of alcohol.

What follows is a description of the process for making an erythritol-containing soft sherbet according to the first aspect of the present invention mentioned above.

According to the first aspect of the present invention, the erythritol-containing soft sherbet is made from a sherbet mix by whipping air into syrup and freezing to form fine ice crystals, the sherbet mix being prepared from water, erythritol, foam stabilizer, and optional alcohol by mixing for dissolution. The process slightly differs in condition depending on whether the foam stabilizer is either gelatin or pectin or egg white, as respectively explained below.

First, the process in which the foam stabilizer is either gelatin or pectin is described in Claims 11 to 15.

As described in Claim 11, the desired erythritol-containing soft sherbet is made from a sherbet mix composed of water, erythritol, and either gelatin or pectin as a foam stabilizer by stirring with cooling, whipping air into syrup until overrun reaches 60-110%, and freezing until ice crystals separate out.

In this case, overrun should be 60-110%, preferably 60-90% for the sherbet especially to have a soft mouthfeel and to readily thaw in the mouth. A sherbet with overrun less than 60% is too hard to be eaten for a while after it has been taken out of the freezer. By contrast, a sherbet with overrun more than 90% unpreferably thaws too fast before it gives a cold sense to the mouth.

In the case where the foam stabilizer is either gelatin or pectin, as in Claim 12, the sherbet may contain erythritol as a sweetener in combination with at least one member selected from the group consisting of sugar, sugar alcohol, and polydextrose.

Moreover, the process according to Claim 11 or 12 may be modified such that the sherbet mix contains optional alcohol as defined in Claim 13.

Incidentally, a preferred amount of gelatin is 0.05-2 vol%, particularly 0.4-1 vol%, of the sherbet mix, and a preferred amount of pectin is 1-3 vol% of the sherbet mix. When the amount of gelatin exceeds 1 vol% or the amount of pectin exceed 3 vol%, a jelly mouthfeel is imparted to the sherbet more and more respectively as the amount thereof increases, although the resulting sherbet is still acceptable as a frozen dessert.

By the way, freezing may be accomplished by using any apparatus capable of stirring a pasty material under cooling condition. Such apparatus include commercial beaters (such as ice cream maker and whip cream mixer) and mixers (such as propeller mixer, homomixer, high-speed mixer, static mixer, and extruder).

Freezing may be accomplished by cooling the prepared sherbet mix in a cold storage container and subsequently stirring it in the same container or in a separate previously cooled mixer (as in the case of commercial ice cream maker). Alternatively, freezing may be accomplished by using a mixer equipped with a cooling mechanism. During freezing, the temperature of the sherbet mix should be kept below its freezing point. The sherbet mix varies in freezing point depending on the amount of saccharide it contains. The freezing point is -1.5°C or lower if the amount of saccharide used is 10 wt%, and the freezing point is -5.5°C or lower if the amount of saccharide used is 35 wt%.

After freezing, the sherbet mix undergoes packaging in adequate containers (such as cups and cones), followed by cooking and solidifying in a freezer. Thus there is obtained the sherbet.

The sherbet mix in the first aspect of the present invention may properly be incorporated with additives, in addition to the above raw materials, including taste elements (such as fruit juice, milk products, and fats and oils), flavors, food colors, acidulant, pH adjusting agents, emulsifiers, and foaming agents.

Second, the process in which the foam stabilizer is egg white is described in Claims 16 and 17. This process is identical with that in Claims 11 to 15 except for the following.

That is, as described in Claim 16, the desired erythritol-containing soft sherbet is made from a sherbet mix composed of water, erythritol, at least one member selected from the group consisting of sugar, sugar alcohol, and polydextrose, and egg white as a foam stabilizer by stirring with cooling, whipping air into syrup until overrun reaches 50-90%, and freezing until ice crystals separate out. In this process, overrun should sufficiently be from 50 to 90%, and 90% of overrun is enough at highest.

Egg white in the form of raw egg white may be added as such when the sherbet mix is prepared. More preferably is that the sherbet mix prepared with raw materials except raw egg and then cooled and mixed may be incorporated with firmly beaten egg white and then cooled and stirred further.

Moreover, the process described in Claim 16 may be modified such that the sherbet mix is incorporated with alcohol, as defined in Claim 17.

The first aspect of the present invention offers the erythritol-containing soft sherbet which has a much lower calorific value than the conventional sherbet containing sucrose or high fructose corn syrup and hence is useful as a dietetic food. Particularly, the sherbet containing erythritol alone as a sweetener is acceptable to patients with derangement of carbohydrate metabolism who are not allowed to take sweeteners such as sucrose and glucose, because it has a lower calorific value (by more than 90%) as compared with the conventional sherbet.

Unlike the conventional sherbet containing citrus juice (lemon or orange) which has an unpleasant after taste due to sweetener of sucrose or the like and fruit juice, the erythritol-containing sherbet was found to have a preferable effect of giving a refreshing after taste because the non-lasting sweetness of erythritol rapidly drowns the unpleasant taste of juice.


(The second aspect of the invention)

What follows is a detailed description of the second aspect of the present invention.

The second aspect of the present invention is intended to provide an erythritol-containing alcoholic soft sherbet which will be served as a soft ice-like frozen alcoholic beverages and a process for producing the same, and also to provide an aqueous solution as a raw material from which the erythritol-containing alcoholic soft sherbet is made.

The erythritol-containing alcoholic soft sherbet as defined in Claim 18 according to the second aspect of the present invention is a modified product of the sherbet defined in Claim 1, which contains alcohol and the amount of alcohol contained is not less than 1 vol% and not more than 18 vol%.

The erythritol-containing alcoholic soft sherbet according to the second aspect of the present invention is served as a soft ice-like frozen alcoholic beverage. It does not flow but gives a soft ice-like mouthfeel. The term "soft ice-like" means that the frozen alcoholic beverage is in an inhomogeneous state, with ice crystals and concentrated solution (formed by freezing) being mixed together. Thus the soft ice-like frozen alcoholic beverage can be easily spooned, with grains not so coarse as chipped ice and not so fine as ice cream.

"Soft ice-like" may be numerically expressed as having a freeze hardness (at -20°C) not less than 150 g and less than 1000 g measured with a rheometer.

Specifically, the freeze hardness is measured with a rheometer by pushing a conical tip (10 mm high, 10 mm in bottom diameter) into a cylindrical frozen sample of the alcoholic beverage (25 mm high, 25 mm in diameter) at a certain speed (1 mm/min) and is expressed in terms of the maximum stress required for the tip to penetrate into the sample. If the maximum stress is not less than 150 g and less than 1000 g, the sample is said herein the present invention to be "soft ice-like". Values not less than 500 g and less than 1000 g are preferable, and values not less than 150 g and less than 500 g are particularly preferable.

The erythritol-containing alcoholic soft sherbet according to the second aspect of the present invention contains alcohol in the form of any known alcoholic beverages, such as whisky, wine, brandy, gin, vodka, tequila, rum (white rum), liqueur, their cocktails, "sake", and "shochu".

Next, the erythritol-containing alcoholic soft sherbet according to the second aspect of the present invention contains at least erythritol as sugar alcohol which functions as saccharide.

The sugar alcohol includes, in addition to erythritol, xylitol, glycerin, sorbitol, mannitol, multitol, lactitol, palatinit, and hydrogenated glucose syrup, as mentioned in the first aspect of the present invention.

These sugar alcohols have a lower calorific value than sucrose, which helps the soft ice-like frozen alcoholic beverage to have a low calorific value. Of these sugar alcohols, erythritol is selected and used alone or in combination with xylitol because of its low molecular weight and good taste, although other sugar alcohols may also be used according to need.

The calorific values of these sugar alcohols have been given in the first aspect of the present invention.

These sugar alcohols are commercially available, and their sources are not specifically restricted. They may be used as it is in the form of either solid (crystals, granules, and fine powder) or liquid.

Erythritol is a polyol with four carbon atoms and a molecular weight of 122. Its sweetness is 80% of that of sucrose. Its molecular weight is much lower than that of sucrose (342), which lowers the freezing point to a great extent. Therefore, the extent to which it lowers the freezing point is much greater than that of sucrose for the same sweetness and sugar content.

On the other hand, xylitol is a polyol with five carbon atoms and a molecular weight of 152. It is as sweet as sucrose. Therefore, the freezing point of xylitol is much greater than that of sucrose for the same saccharide concentration.

Xylitol has a eutectic point at a considerably lower temperature and a considerably higher concentration than other polyols and sugars. Therefore, it is stable in its frozen state. Upon freezing, it leaves a concentrated solution having a low viscosity, which also contributes to the low freeze hardness.

For this reason, erythritol used alone or in combination with xylitol lowers the freezing point without increasing the sweetness and saccharide concentration. This leads to a reduction in freeze hardness. Thus obtained is the erythritol-containing alcoholic soft sherbet or the soft ice-like frozen alcoholic beverage.

Incidentally, glycerin also has the freeze control action similar to erythritol or xylitol, but its use should be limited to such an extent that it does not aggravate taste and does not increase calorific value.

Another adequate additive is sorbitol. It has a molecular weight of 182, which is slightly higher than that of erythritol and xylitol but lower than sucrose. As compared with sucrose, it is less sweet and lower in crystallizability, for which sorbitor is adequate as additives.

Erythritol and xylitol are as palatable as sucrose and other sugars and is free from after taste.

Thus, the frozen alcoholic beverage containing erythritol alone or in combination with xylitol without containing sugar has a low level of calorific value, with its sweetness quality unchanged. (See Claims 21 and 22.)

Similarly to non-sugar sweeteners, these sugar alcohols permit the production of an erythritol-containing alcoholic soft sherbet or soft ice-like frozen alcoholic beverage which is non-cariogenic and low in calorific value.

Incidentally, the erythritol-containing alcoholic soft sherbet according to the second aspect of the present invention may contain, in addition to the above-mentioned sugar alcohols, a variety of sugars or non-sugar sweeteners. Owing to such sugars or non-sugar sweeteners, the soft sherbet to be served as a frozen alcoholic beverage may have its sweetness enhanced or lessened as desired or may have its sweetness quality improved or controlled.

Examples of the sugar include sucrose, glucose, high fructose corn syrup, trehalose, and starch syrup.

Examples of the non-sugar sweeteners include aspartame, acesulfam K, stevia, dihydrochalcones, and thaumatin. These non-sugar sweeteners are used so that the soft sherbet or soft ice-like frozen alcoholic beverage is non-cariogenic and low in calorific value.

The erythritol-containing alcoholic soft sherbet as defined in Claim 18 basically contains the above-mentioned components, with alcohol in an amount not less than 1 vol% and not more than 18 vol% and with at least erythritol as the sugar alcohol. With an alcohol concentration exceeding 18 vol%, the soft sherbet (the erythritol containing alcoholic soft sherbet according to the second aspect of the present invention defined in Claim 18, and served as a soft ice-like frozen alcoholic beverage) does not freeze sufficiently, and this makes it necessary to maintain the freezing temperature very low so that the soft sherbet has a mouthfeel resembling that of soft ice as desired.

The sherbet of the present invention defined in Claim 18 contains saccharide in a total amount not more than 30 wt% as defined in Claim 19.

In case where alcohol concentration is as low as 1 vol%, for example, it is possible to obtain a soft sherbet or soft-ice like frozen alcoholic beverage with saccharide in an amount of 55 wt%. The saccharide content of 55 wt% is too sweet to taste even though the sugar alcohol is less sweet than sucrose and other sugars. Therefore, preferable total amount of saccharide is 30 wt% or less as defined in Claim 19.

In general, with an alcohol concentration more than 8 vol%, the sherbet is less palatable (due to high alcohol concentration) than the ordinary cocktails which are served without freezing. With an alcohol concentration less than 4 vol%, the sherbet is high in freeze hardness and lacks the mouthfeel resembling that of soft ice. Therefore, the preferred alcohol concentration is 4-8 vol% and the total sugar content corresponding to this alcohol concentration is 15-25 wt%.

Incidentally, the alcohol concentration can be adjusted by adding water to the predetermined concentration.

The desired alcohol concentration and the total saccharide amount corresponding to it are defined in Claim 20.

That is, according to Claim 20, the soft sherbet or the erythritol-containing soft ice-like frozen alcoholic beverage contains 4-8 vol% alcohol and also contains erythritol as at least one of sugar alcohols, with the total amount of saccharide being 15-25 wt%.

In the erythritol-containing alcoholic soft sherbet or the erythritol-containing soft ice-like frozen alcoholic beverage according to the second aspect of the Invention, most preferable total amount of saccharide depends on the alcohol concentration. If the alcohol concentration is low, in order that the frozen alcoholic beverage maintains a freeze hardness in the range of 150 g to 1000 g, the saccharide concentration may be rather high. Conversely, if the alcohol concentration is high, the saccharide concentration should be low.

Consequently, according to claim 21, the erythritol-containing alcoholic soft sherbet or the erythritol-containing soft ice-like frozen alcoholic beverage of the present invention contains alcohol in an amount of 4-6 vol%, erythritol in an amount not less than 1 wt% and less than 10 wt%, and xylitol in an amount of 0-23 wt%, with the total saccharide amount being 20-25 wt%.

By contrast, the total saccharide amount is less than this if the alcohol concentration exceeds 6 vol%, as defined in Claim 22.

That is, according to Claim 22, in the erythritol-containing alcoholic soft sherbet or the erythritol-containing soft ice-like frozen alcoholic beverage of the present invention the amount of alcohol contained is over 6 vol% and not more than 8 vol%, the amount of erythritol not less than 1 wt% and less than 10 wt%, and the amount of xylitol 0-20 wt%, with the total saccharide amount being 15-20 wt%.

In other words, the content of erythritol should be not less than 1 wt% and less than 10 wt%. An amount less than 1 wt% leads to insufficient freeze hardness and an amount of 10 wt% or above leads to crystallization in the product. Thus, both cases are undesirable.

Next, the content of xylitol varies in its upper limit depending on the alcohol concentration.

That is, xylitol is contained in an amount of 0-23 wt% when the alcohol concentration is 4-6 vol%, or in an amount of 0-20 wt% when the alcohol concentration is over 6 vol% and not more than 8 vol%. The xylitol content exceeding the upper limit results in an excessively sweet, thus undesirable product.

Incidentally, the total saccharide content also varies depending on the alcohol concentration. It is 20-25 wt% when the alcohol concentration is 4-6 vol%, and it is 15-20 wt% when the alcohol concentration is over 6 vol% and not more than 8 vol%.

The reason for this is that a slightly high saccharide concentration is acceptable for a low alcohol concentration, whereas a lower saccharide concentration is necessary for a high alcohol concentration, as mentioned above.

With a total saccharide content less than the above-mentioned lower limit, the resulting product has a rough mouthfeel due to excessively grown ice crystals. By contrast, with a total saccharide content more than the above-mentioned upper limit, the resulting product is excessively sweet. Both cases are undesirable.

The erythritol-containing alcoholic soft sherbet or the erythritol-containing soft ice-like frozen alcoholic beverage according to the second aspect of the present invention may additionally contain a thickening stabilizer as defined in Claim 23. The thickening stabilizer may be in the form of powder, solid, or whatever. Any commercial one may be used.

The thickening stabilizer that can be used in the present invention as defined in Claim 23 may be any one which is ordinarily used in the food industry. Particularly, desirable is one or more species selected from the group consisting of xanthane gum, carrageenan, guar gum, locust bean gum, tamarind gum, and gum arabic.

These thickening stabilizers impart an adequate viscosity to the product, regulate the size of ice crystals, thereby forming agglomerated ice, and help the entire frozen layers to freeze uniformly. In addition, they keep the product in its soft ice state for a long time after it has been taken out of the freezer.

The erythritol-containing alcoholic soft sherbet or the erythritol-containing soft ice-like frozen alcoholic beverage defined in Claim 23 according to the present invention may contain a thickening stabilizer in an amount of 0.02-0.15 wt%, preferably 0.05-0.1 wt%.

With an amount less than 0.02 wt%, the thickening stabilizer does not produce its effect. With an amount more than 0.15 wt%, the thickening stabilizer unpreferably renders the product excessively viscous.

The erythritol-containing alcoholic soft sherbet or the erythritol-containing soft ice-like frozen alcoholic beverage according to the second aspect of the present invention contains an alcoholic ingredient, erythritol (or erythritol in combination with xylitol), a thickening stabilizer, and an optional saccharide other than erythritol and xylitol. It may further optionally contain another food component and food additive component such as fruit juice, flavors, food colors, and acidulant (including citric acid, malic acid, and tartaric acid) in an amount not harmful to the object of the present invention.

Of these components, juice is desirable because it imparts an adequate taste and flavor to the alcoholic beverage. Therefore, usually juice is incorporated into the product.

Juice of any kind can be used without specific restrictions. Examples include those of citrus fruits (such as lime, lemon, orange, "yuzu", and "kabosu"), pineapple, apple, grape, and vegetables (such as tomato). Their concentrated or powdered juice is also acceptable.

The erythritol-containing alcoholic soft sherbet or the erythritol-containing soft ice-like frozen alcoholic beverage according to the second aspect of the present invention may be incorporated with juice in an amount of about 4 vol%, preferably 0.5-5 vol%. With an amount less than 0.5 vol%, the juice gives no flavor desired. With an amount more than 5 vol%, the juice gives flavor excessively and lowers the freezing point.

The above-mentioned erythritol-containing alcoholic soft sherbet or the erythritol-containing soft ice-like frozen alcoholic beverage according to the second aspect of the present invention can be easily made by stirring and mixing the above-mentioned components as raw materials and simply freezing the resulting mixture, without stirring and whipping air into syrup, in the freezing compartment of a home refrigerator or a refrigerated warehouse in the convenience store or the like, because it has a high alcohol concentration.

The above-mentioned erythritol-containing alcoholic soft sherbet or the erythritol-containing soft ice-like frozen alcoholic beverage according to the second aspect of the present invention is produced by the process explained below.

As defined in Claims 24 to 27, the process consists of stirring and mixing an alcoholic ingredient, erythritol or a mixture of erythritol and xylitol, an optional saccharide other than erythritol and xylitol, and a thickening stabilizer, and then freezing the resulting mixture.

The mixing ratio is described in Claims 18 to 23 covering the sherbet. The freezing may be accomplished usually at temperatures in the range of -15°C to -20°C for 7 to 20 hours, although these conditions are not specifically restricted.

The erythritol-containing alcoholic soft sherbet or the erythritol-containing soft ice-like frozen alcoholic beverage according to the second aspect of the present invention should preferably undergo heat sterilization after packaging into an adequate container and sealing.

Moreover, Claims 28 to 31 cover a solution as a raw material from which the sherbet is made, the solution comprising an alcoholic ingredient, erythritol or a mixture of erythritol and xylitol, an optional saccharide other than erythritol and xylitol, and a thickening stabilizer. Specific description on each component has been made in the above.

The solution as a raw material for sherbet production as defined in Claims 28 to 31 may be distributed as such in the form of solution as a raw material for sherbet production and made into the erythritol-containing alcoholic soft sherbet or the erythritol-containing soft ice-like frozen alcoholic beverage as defined in Claims 18 to 23 according to the second aspect of the present invention by simply freezing in the freezing compartment of a home refrigerator or a refrigerated warehouse in the convenience store or the like.

Examples

In what follows, the invention will be described in more detail with reference to Examples and Comparative Examples, which are not intended to restrict the scope of the invention. (Examples according to the first aspect of the invention)

Examples 1 to 10

In 365 ml of water was dissolved 100 g of erythritol (from Nikken Chemicals Co., Ltd.). In 50 ml of boiling water was dissolved gelatin (from Maruha Co., Ltd.) as a foam stabilizer in a varied amount from 2.0 g to 5.0 g as shown in Table 1. To the erythritol solution were added the gelatin solution, 75 ml of lemon juice, and 10 ml of liqueur (trade name: "Cointreau" containing 40 vol% alcohol, from Remy Japon Co., Ltd.). Thus there was obtained 500 ml of sherbet mix (having a freezing point of -3.5°C). This sherbet mix was put in an electric ice cream maker (from Ismet Co., Ltd.) which had previously been cooled to -20°C in a freezer and then stirred therein until ice crystals crystallized, with overrun adjusted to about 70% to 110% as shown in Table 1. During this process, the temperature of the sherbet mix was -6°C. Then, the sherbet mix was put in cups and solidified at -20°C. Thus there was obtained the sherbet. Table 1 shows the processing conditions and results.

Comparative Example 1

The same raw materials as in Example 1 were used except that the erythritol was replaced by sucrose, the gelatin solution was replaced by 50 ml of water, and the same procedure as in Example 1 was repeated except that the overrun was reduced to 25%, and the sherbet was made. Table 1 shows the processing conditions and results.

Table 1

| | Example No. | | | | | | | | | | Comparative Example 1 |
|---|---|---|---|---|---|---|---|---|---|---|---|
| | 1 | 2 | 3 | 4 | 5 | 6 | 7 | 8 | 9 | 10 | |
| Overrun (%) | 110 | 110 | 90 | 90 | 90 | 80 | 80 | 80 | 70 | 70 | 25 |
| Gelatin (g) | 5.0 | 2.0 | 5.0 | 3.0 | 2.0 | 5.0 | 4.0 | 3.0 | 5.0 | 4.0 | 4.0 |
| (w/v %) | 1.0 | 0.4 | 1.0 | 0.6 | 0.4 | 1.0 | 0.8 | 0.6 | 1.0 | 0.8 | 0.8 |
| Calorie (kcal/100 ml) | 3.0 | 3.0 | 3.0 | 3.3 | 3.3 | 3.4 | 3.4 | 3.4 | 3.7 | 3.7 | 69.0 |
| Evaluation * | ○ | ○ | ○ | ○ | ○ | ○ | ○ | △ | ○ | △ | ○ |

*

○ : soft to be scooped
△ : slightly hard to be scooped
X : too hard to be scooped

It is shown in Table 1 that the sherbet according to the first aspect of the present invention is superior in storage stability, retaining its soft mouthfeel for 3 months in the freezer at -20°C, and is much lower in calorific value as compared with the sucrose-containing sherbet in Comparative Example 1.

Example 11

In 360 ml of water was dissolved 100 g of erythritol (from Nikken Chemicals Co., Ltd.). In 50 ml of boiling water was dissolved 5.0 g of gelatin (from Maruha Co., Ltd.) as a foam stabilizer. To the erythritol solution were added the gelatin solution, 75 ml of lemon juice, and 15 ml of liqueur (trade name: "Maraschino" containing 30 vol% alcohol, from Suntory Co., Ltd.). Thus there was obtained 500 ml of sherbet mix (having a freezing point of -3.5°C). This sherbet mix was put in an electric ice cream maker (from Ismet Co., Ltd.) which had previously been cooled to -20°C in a freezer and then stirred therein until ice crystals crystallized, with overrun adjusted to 100%. During this process, the temperature of the sherbet mix was -6°C. Then, the sherbet mix was put in cups and solidified at -20°C. Thus there was obtained the sherbet which was easy to spoon and gave a soft mouthfeel.

Example 12

In 350 ml of black tea was dissolved 100 g of erythritol (from Nikken Chemicals Co., Ltd.). In 50 ml of boiling water was dissolved 4.0 g of gelatin (from Maruha Co., Ltd.) as a foam stabilizer. To the erythritol solution were added the gelatin solution, 10 ml of liqueur (trade name: "Cointreau" containing 40 vol% alcohol, from Remy Japon Co., Ltd.), and about 90 ml of water. Thus there was obtained 500 ml of sherbet mix. This sherbet mix was put in an electric ice cream maker (from Ismet Co., Ltd.) which had previously been cooled to -20°C in a freezer and then stirred therein until ice crystals crystallized, with overrun adjusted to 85%. Then, the sherbet mix was put in cups and solidified at -20°C. Thus there was obtained the sherbet with a flavor of black tea which was easy to spoon and gave a soft mouthfeel.

Example 13

In 265 ml of water was dissolved 100 g of erythritol (from Nikken Chemicals Co., Ltd.). In 150 ml of boiling water was dissolved 5 g (1 vol%) or 15 g (3 vol%) of pectin as a foam stabilizer. To the erythritol solution were added the pectin solution, 75 ml of lemon juice, and 10 ml of liqueur (trade name: "Cointreau" from Remy Japon Co., Ltd.). Thus there was obtained 500 ml of sherbet mix. This sherbet mix was put in an electric ice cream maker (from Ismet Co., Ltd.) which had previously been cooled to -20°C in a freezer and then stirred therein until ice crystals crystallized. When overrun reached about 20%, the sherbet mix was incorporated with 60 g of firmly beaten egg white. Whipping air into syrup was continued until overrun reached 100%. Then, the sherbet mix was put in cups and solidified at -20°C. Thus there were obtained two kinds of sherbet (with 5 g or 15 g of pectin) both of which were easy to spoon and gave a soft mouthfeel.
As mentioned above, the erythritol-containing sherbet according to the first aspect of the present invention gives a desirable soft mouthfeel as the result of its overrun of 50-130% although it contains erythritol as its sole sweetener.

Examples 14 to 20

In 160 ml of water and 150 ml of orange juice were dissolved erythritol (from Nikken Chemicals Co., Ltd.) and sucrose in an amount respectively shown in Table 2. To the resulting solution were added 10 ml of lemon juice and 8 ml of liqueur (trade name: "Cointreau" containing 40 vol% alcohol, from Remy Japon Co., Ltd.). Thus there was obtained a sherbet mix. This sherbet mix was put in an electric ice cream maker (from Ismet Co., Ltd.) which had previously been cooled to -20°C in a freezer and then stirred therein to crystallize ice crystals until overrun reached about 40%. The frothed sherbet mix was incorporated with 30 g of firmly beaten egg white. Whipping air into syrup was continued until overrun reached 90%. The temperature of the sherbet mix at that time was -6°C. Then, the sherbet mix was put in cups and solidified at -20°C. Thus there was obtained the sherbet. The results are shown in Table 2.

Example 21

In 160 ml of water and 150 ml of orange juice were dissolved erythritol (from Nikken Chemicals Co., Ltd.) and sucrose in an amount respectively shown in Table 2. To the resulting solution were added 10 ml of lemon juice and 8 ml of liqueur (trade name: "Cointreau" containing 40 vol% alcohol, from Remy Japon Co., Ltd.). Thus there was obtained a sherbet mix. This sherbet mix was put in an electric ice cream maker (from Ismet Co., Ltd.) which had previously been cooled to -20°C in a freezer, 20 g of firmly beaten egg white was added thereto and the sherbet mix was stirred until ice crystals crystallized, with overrun adjusted to 60%. The temperature of the sherbet mix at that time was -6°C. Then, the sherbet mix was put in cups and solidified at -20°C. Thus there were obtained the sherbet. The results are shown in Table 2.

Table 2

| | Example No. | | | | | | | |
|---|---|---|---|---|---|---|---|---|
| | 14 | 15 | 16 | 17 | 18 | 19 | 20 | 21 |
| Total sugar content (w/v%) | 23 | 17 | 17 | 13 | 13 | 11 | 11 | 13 |
| Erythritol (g) | 30 | 25 | 20 | 19 | 12.5 | 20 | 15 | 12.5 |
| Sucrose (g) | 30 | 15 | 20 | 6 | 12.5 | 0 | 5 | 12.5 |
| Evaluation * | ○ | △ | ○ | ○ | ○ | X | ○ | ○ |

\*

○ : soft to be scooped
△ : slightly hard to be scooped
X : too hard to be scooped

It is shown in Table 2 that the sherbet with egg white according to the first aspect of the present invention is superior in storage stability, retaining its soft mouthfeel for 3 months in the freezer at -20°C.
The sherbet in Example 21 which contains both erythritol and sucrose, though having an overrun of 60%, was soft to be scooped. The same result was obtained in Example 21 in which the sucrose was replaced by lactitol.

Example 22 and Comparative Example 2

The same procedure as in Example 14 was repeated to make a sherbet from a sherbet mix containing the same ingredients as in Example 17 and 0.65 g of emulsifier (sucrose fatty acid ester, trade name: "DK Ester F-160" from Dai-ichi Kogyo Seiyaku Co., Ltd.) and 1 g of foam stabilizer (a mixture of tamarind gum 80% and guar gum 20%, trade name: "Glyroid 2AG" from Dainippon Seiyaku Co., Ltd.).

In Comparative Example 2, the same procedure was repeated and the same ingredients were used as in Example 21 to produce a sherbet except that no egg white was added.

The sherbet in Example 22 (which was incorporated with an emulsifier and foam stabilizer) gave a soft mouthfeel even immediately after taken out of the freezer, whereas the sherbet in Comparative Example 2 (which was not incorporated with egg white) was too hard to be scooped for a while after taken out of the freezer and thus was not able to be eaten.

Examples 23 and 24 and comparative Example 3

In 320 ml of water were dissolved eryhhritol (from Nikken Chemicals Co., Ltd.), sucrose, lactitol (from Nikken Chemicals Co., Ltd.), and polydextrose (from Pfizer Co., Ltd.) in varied amounts as shown in Table 3. To the resulting solution were added 8 ml of liqueur (trade name: "Cointreau" containing 40 vol% alcohol, from Remy Japon Co., Ltd.), 0.65 g of emulsifier (sucrose fatty acid ester, trade name: "DK Ester F-160 (HLB 15)" from Dai-ichi Kogyo Seiyaku Co., Ltd.), and 1 g of foam stabilizer (a mixture of tamarind gum 80% and guar gum 20%, trade name: "Glyroid 2AG" from Dainippon Seiyaku Co., Ltd.). Thus there was obtained a sherbet mix. This sherbet mix was put in an electric ice cream maker (from Ismet Co., Ltd.) which had previously been cooled to -20°C in a freezer and then stirred therein until ice crystals crystallized, with overrun adjusted to about 40%. The frothed sherbet mix was incorporated with 30 g of firmly beaten egg white. The overrun of the sherbet mix was 90% and the temperature was -6°C. Then, the sherbet mix was put in cups and solidified at -20°C. Thus there was obtained the sherbet. The results are shown in Table 3.

Table 3

| | Example No. | | Comparative Example No. |
|---|---|---|---|
| | 23 | 24 | 3 |
| Erythritol (g) | 18 | 18 | 0 |
| Lactitol (g) | 22 | 0 | 0 |
| Polydexdrose (g) | 0 | 22 | 0 |
| Sucrose (g) | 0 | 0 | 40 |
| Calorific value (kcal/100 ml) | 13.9 | 9.4 | 37.5 |
| Evaluation * | ◯ | ◯ | ◯ |

\*
◯ : soft to be scooped
△ : slightly hard to be scooped
X : too hard to be scooped

It is noted from Table 3 that the erythritol-containing sherbet with egg white (in Examples 23 and 24) according to the first aspect of the present invention is much lower in calorific value than the sherbet using sucrose in Comparative Example 3.

The foregoing indicates that the erythritol-containing sherbet according to the first aspect of the present invention has a low calorific value and gives a soft mouthfeel because it contains erythritol as a sweetener, with part of it replaced by any other component, so that it decreases in freeze hardness.

(Examples according to the second aspect of the invention)

Experiment Example 1

In a fixed amount of water were dissolved white rum (as an alcoholic ingredient, in alcohol concentration of 4 vol% or 6 vol%), high fructose corn syrup, and erythritol (from Nikken Chemicals Co., Ltd.) in a varied ratio as shown in Table 4. The solution was stirred and mixed together with xanthane gum (0.08 wt%) and lemon juice (4 vol%) and then frozen in a freezer at -20°C for 9 hours. Thus there was obtained an erythritol-containing alcoholic soft sherbet or frozen alcoholic beverage (frozen cocktail "daiquiri"). Incidentally, this soft sherbet contains high fructose corn syrup since an ordinary frozen cocktail uses high fructose corn syrup, which is as sweet as sucrose, and readily lowers freeze hardness.

Evaluations on freeze hardness and observation results of the thus obtained frozen alcoholic beverage are shown in Table 4. In Table 4, the alcoholic ingredient is expressed in terms of ethanol concentration.

Table 4 (Experiment Example 1)

| Run No. | Alcohol concentration (%) | Total amount of saccharides (%) | High fructose com syrup (%) | Erythritol (%) | Freeze hardness | Remarks |
|---|---|---|---|---|---|---|
| 1-1 | 4 | 15 | 15 | 0 | X | |
| 1-2 | 4 | 15 | 10 | 5 | X | |
| 1-3 | 4 | 15 | 8 | 7 | X | |
| 1-4 | 4 | 15 | 6 | 9 | X | |
| 1-5 | 4 | 15 | 5 | 10 | X | Crystallized |
| 2-1 | 4 | 20 | 20 | 0 | X | |
| 2-2 | 4 | 20 | 19 | 1 | △ | |
| 2-3 | 4 | 20 | 17 | 3 | O | |
| 2-4 | 4 | 20 | 15 | 5 | O | |
| 2-5 | 4 | 20 | 13 | 7 | O | |
| 2-6 | 4 | 20 | 11 | 9 | O | |
| 2-7 | 4 | 20 | 10 | 10 | O | Crystallized |
| 3-1 | 4 | 25 | 25 | 0 | O | Too sweet |
| 3-2 | 4 | 25 | 24 | 1 | O | Rather oversweet |
| 3-3 | 4 | 25 | 22 | 3 | O | |
| 3-4 | 4 | 25 | 20 | 5 | O | |
| 3-5 | 4 | 25 | 18 | 7 | O | |
| 3-6 | 4 | 25 | 16 | 9 | O | |
| 3-7 | 4 | 25 | 15 | 10 | O | Crystallized |
| 4-1 | 4 | 30 | 30 | 0 | O | Too sweet |
| 5-1 | 6 | 15 | 15 | 0 | X | |
| 5-2 | 6 | 15 | 10 | 5 | X | |
| 5-3 | 6 | 15 | 8 | 7 | X | |
| 5-4 | 6 | 15 | 6 | 9 | X | |
| 5-5 | 6 | 15 | 5 | 10 | X | Crystallized |
| 6-1 | 6 | 20 | 20 | 0 | △ | |
| 6-2 | 6 | 20 | 19 | 1 | △ | |
| 6-3 | 6 | 20 | 17 | 3 | O | |
| 6-4 | 6 | 20 | 15 | 5 | O | |
| 6-5 | 6 | 20 | 13 | 7 | O | |
| 6-6 | 6 | 20 | 11 | 9 | O | |
| 6-7 | 6 | 20 | 10 | 10 | O | Crystallized |
| 7-1 | 6 | 25 | 25 | 0 | △ | Too sweet |
| 7-2 | 6 | 25 | 24 | 1 | △ | Rather oversweet |
| 7-3 | 6 | 25 | 22 | 3 | O | |
| 7-4 | 6 | 25 | 20 | 5 | ◎ | |
| 7-5 | 6 | 25 | 18 | 7 | ◎ | |
| 7-6 | 6 | 25 | 16 | 9 | O | |
| 7-7 | 6 | 25 | 15 | 10 | O | Crystallized |
| 8-1 | 6 | 30 | 30 | 0 | ◎ | Too sweet |

Evaluations:

◎ : in particularly good state, with freeze hardness not less than 1500 g and less than 500 g.

O : in good state, with freeze hardness not less than 500 g and less than 1000 g.

△ : in slightly good state, with freeze hardness not less than 1000 g and less than 1500 g.

X : in poor state, with freeze hardness not less than 1500 g.

It is noted from Table 4 that the resulting soft ice-like frozen alcoholic beverage has moderate sweetness and preferable freeze hardness (with erythritol not crystallized) if the concentration of alcohol is 4-6 vol%, the content of erythritol is 3-7 wt%, and the total amount of saccharides is 20-25 wt%.

It is also noted from Table 4 that such a soft ice-like frozen alcoholic beverage cannot be obtained if high fructose corn syrup is used alone. In addition, it is noted that the resulting product is turbid to have undesired properties due to crystallization when it contains erythritol in an amount of 10 wt%.

Experiment Example 2

In a fixed amount of water were dissolved white rum (as an alcoholic ingredient, in alcohol concentration of 7 vol% or 8 vol%), high fructose corn syrup, and erythritol (from Nikken Chemicals Co., Ltd.) in a varied ratio as shown in Table 5. The solution was stirred and mixed together with xanthane gum (0.08 wt%) and lemon juice (4 vol%) and then frozen in a freezer at -20°C for 9 hours. Thus there was obtained a frozen alcoholic beverage (frozen cocktail "Daiquiri").

Evaluations on freeze hardness and observation results of the thus obtained frozen alcoholic beverage are shown in Table 5. In Table 5, the alcoholic ingredient is expressed in terms of ethanol concentration contained generally in drink. Freeze hardness was evaluated in the similar method as shown in remarks of Table 4.

Table 5

| (Experiment Example 2) | | | | | | |
|---|---|---|---|---|---|---|
| Run No. | Alcohol concentration (%) | Total amount of saccharides (%) | High fructose corn syrup (%) | Erythritol(%) | Freeze hardness | Remarks |
| 1-1 | 7 | 15 | 15 | 0 | △ | |
| 1-2 | 7 | 15 | 14 | 1 | △ | |
| 1-3 | 7 | 15 | 12 | 3 | ○ | |
| 1-4 | 7 | 15 | 10 | 5 | ○ | |
| 1-5 | 7 | 15 | 8 | 7 | ○ | |
| 1-6 | 7 | 15 | 8 | 9 | ○ | |
| 1-7 | 7 | 15 | 5 | 10 | ○ | Crystallized |
| 2-1 | 7 | 20 | 20 | 0 | △ | |
| 2-2 | 7 | 20 | 19 | 1 | △ | |
| 2-3 | 7 | 20 | 17 | 3 | ○ | |
| 2-4 | 7 | 20 | 15 | 5 | ◎ | |
| 2-5 | 7 | 20 | 13 | 7 | ◎ | |
| 2-6 | 7 | 20 | 11 | 9 | ◎ | |
| 2-7 | 7 | 20 | 10 | 10 | ○ | Crystallized |
| 3-1 | 7 | 25 | 25 | 0 | ◎ | Too sweet |
| 4-1 | 8 | 15 | 15 | 0 | △ | |
| 4-2 | 8 | 15 | 14 | 1 | △ | |
| 4-3 | 8 | 15 | 12 | 3 | ○ | |
| 4-4 | 8 | 15 | 10 | 5 | ○ | |
| 4-5 | 8 | 15 | 8 | 7 | ◎ | |
| 4-6 | 8 | 15 | 6 | 9 | ◎ | |
| 4-7 | 8 | 15 | 5 | 10 | ○ | Crystallized |
| 5-1 | 8 | 20 | 20 | 0 | △ | |
| 5-2 | 8 | 20 | 19 | 1 | △ | |

Table 5 (continued)

| (Experiment Example 2) | | | | | | |
|---|---|---|---|---|---|---|
| Run No. | Alcohol concentration (%) | Total amount of saccharides (%) | High fructose corn syrup (%) | Erythritol(%) | Freeze hardness | Remarks |
| 5-3 | 8 | 20 | 17 | 3 | ◎ | |
| 5-4 | 8 | 20 | 15 | 5 | ◎ | |
| 5-5 | 8 | 20 | 13 | 7 | ◎ | |
| 5-6 | 8 | 20 | 11 | 9 | ◎ | Crystallized |
| 5-7 | 8 | 20 | 10 | 10 | ○ | Crystallized |
| 6-1 | 8 | 25 | 25 | 0 | ◎ | Too sweet |

It is noted from Table 5 that the erythritol-containing alcoholic soft sherbet or soft ice-like frozen alcoholic beverage has moderate sweetness and desirable freeze hardness (with erythritol not crystallized) if the alcohol concentration is over 6 vol% and not more than 8 vol%, the content of erythritol is not less than 1 wt% and less than 10 wt%, and the total amount of saccharides is in the range of 15-20 wt%.

It is also noted that as compared with the results (Table 4) of Experiment Example 1 in which the alcohol concentration is 4-6 vol%, if the alcohol concentration is high, although the same amount of erythritol is required, it is enough that the amount thereof is less than the total amount of saccharides.

Experiment Example 3

In a fixed amount of water were dissolved tequila (as an alcoholic ingredient, in an alcohol concentration of 4 vol% or 6 vol%), high fructose corn syrup, erythritol (from Nikken Chemicals Co., Ltd.), and xylitol (from Nikken Chemicals Co., Ltd.) in a varied ratio as shown in Table 6. The solution was stirred and mixed together with carrageenan (0.08 wt%) and lemon juice (4 vol%) and then frozen in a freezer at -20°C for 9 hours. Thus there was obtained erythritol-containing alcoholic soft sherbet or a frozen alcoholic beverage (frozen cocktail "Margarita").

Evaluations on freeze hardness and observation results of the thus obtained frozen alcoholic beverage are shown in Table 6. In Table 6, the alcoholic ingredient is expressed in terms of ethanol concentration contained generally in drink. Freeze hardness was evaluated in the similar method as shown in remarks of Table 4.

Table 6 (Experiment Example 3)

| Run No. | Alcohol concen-tration (%) | Total amount of saccharides (%) | High fructose corn syrup (%) | Erythritol (%) | Xylitol (%) | Freeze Hardness | Observation |
|---|---|---|---|---|---|---|---|
| 1-1 | 4 | 20 | 17 | 3 | 0 | ○ | |
| 1-2 | 4 | 20 | 0 | 3 | 17 | ○ | |
| 1-3 | 4 | 20 | 15 | 5 | 0 | ○ | |
| 1-4 | 4 | 20 | 0 | 5 | 15 | ○ | |
| 1-5 | 4 | 20 | 0 | 7 | 13 | ○ | |
| 1-6 | 4 | 20 | 13 | 7 | 0 | ○ | |
| 1-7 | 4 | 18 | 0 | 7 | 11 | △ | |
| 1-8 | 4 | 20 | 11 | 9 | 0 | ○ | |
| 1-9 | 4 | 20 | 0 | 9 | 11 | ○ | |
| 1-10 | 4 | 25 | 24 | 1 | 0 | ○ | Rather oversweet |
| 1-11 | 4 | 25 | 0 | 1 | 24 | ○ | Rather oversweet |
| 1-12 | 4 | 25 | 22 | 3 | 0 | ○ | |
| 1-13 | 4 | 25 | 0 | 3 | 22 | ○ | |
| 1-14 | 4 | 25 | 20 | 5 | 0 | ○ | |
| 1-15 | 4 | 21 | 0 | 5 | 16 | ○ | |
| 1-16 | 4 | 25 | 18 | 7 | 0 | ○ | |
| 1-17 | 4 | 21 | 0 | 7 | 14 | ○ | |
| 1-18 | 4 | 25 | 16 | 9 | 0 | ○ | |
| 1-19 | 4 | 21 | 0 | 9 | 12 | ○ | |
| 2-1 | 6 | 25 | 24 | 1 | 0 | ○ | Rather oversweet |
| 2-2 | 6 | 25 | 0 | 1 | 24 | ◎ | Rather oversweet |
| 2-3 | 6 | 25 | 22 | 3 | 0 | ◎ | |
| 2-4 | 6 | 21 | 0 | 3 | 18 | ◎ | |
| 2-5 | 6 | 25 | 20 | 5 | 0 | ◎ | |
| 2-6 | 6 | 21 | 0 | 5 | 16 | ◎ | |
| 2-7 | 6 | 25 | 18 | 7 | 0 | ◎ | |
| 2-8 | 6 | 21 | 0 | 7 | 14 | ◎ | |
| 2-9 | 6 | 25 | 16 | 9 | 0 | ◎ | |
| 2-10 | 6 | 21 | 0 | 9 | 2 | ◎ | |

It is noted from Table 6 that the erythritol-containing alcoholic soft sherbet or soft ice-like frozen alcoholic beverage has moderate sweetness and desirable freeze hardness (with erythritol not crystallized) if the alcohol concentration is 4-6 vol%, the content of erythritol is 3-7 wt%, and the total amount of saccharides is 20-25 wt%. The amount of xylitol to be used in combination with erythritol should be 4-23 wt%.

It is also noted that the erythritol-containing alcoholic soft sherbet or soft ice-like frozen alcoholic beverage has good properties if it contains erythritol, or erythritol and xylitol even though it does not contain saccharides. This suggests the possibility of sugarless formulations.

Experiment Example 4

In a fixed amount of water were dissolved tequila (as an alcoholic ingredient, in an alcohol concentration of 7 vol% or 8 vol%), high fructose corn syrup, erythritol (from Nikken Chemicals Co., Ltd.), and xylitol (from Nikken Chemicals Co., Ltd.) in a varied ratio as shown in Table 7. The solution was stirred and mixed together with carrageenan (0.08 wt%) and lemon juice (4 vol%) and then frozen in a freezer at -20°C for 9 hours. Thus there was obtained erythritol-containing alcoholic soft sherbet or a frozen alcoholic beverage (frozen cocktail "Margarita").

Evaluations on freeze hardness and observation results of the thus obtained frozen alcoholic beverage are shown in Table 7. In Table 7, the alcoholic ingredient is expressed in terms of ethanol concentration contained generally in drink. Freeze hardness was evaluated in the similar method as shown in remarks of Table 4.

Table 7 (Experiment Example 4)

| Run No. | Alcohol concentration (%) | Total amount of saccharides (%) | High fructose corn syrup (%) | Erythritol (%) | Xylitol (%) | Freeze Hardness | Observations |
|---|---|---|---|---|---|---|---|
| 1-1 | 7 | 15 | 12 | 3 | 0 | ○ | |
| 1-2 | 7 | 15 | 0 | 3 | 12 | ○ | |
| 1-3 | 7 | 15 | 10 | 5 | 0 | ○ | |
| 1-4 | 7 | 13 | 0 | 5 | 8 | △ | |
| 1-5 | 7 | 15 | 8 | 7 | 0 | ○ | |
| 1-6 | 7 | 13 | 0 | 7 | 6 | △ | |
| 1-7 | 7 | 15 | 6 | 9 | 0 | ○ | |
| 1-8 | 7 | 20 | 19 | 1 | 0 | ○ | |
| 1-9 | 7 | 20 | 0 | 1 | 19 | ○ | |
| 1-10 | 7 | 20 | 17 | 3 | 0 | ○ | |
| 1-11 | 7 | 17 | 0 | 3 | 14 | ○ | |
| 1-12 | 7 | 20 | 15 | 5 | 0 | ○ | |
| 1-13 | 7 | 17 | 0 | 5 | 12 | ○ | |
| 1-14 | 7 | 20 | 13 | 7 | 0 | ◎ | |
| 1-15 | 7 | 17 | 0 | 7 | 10 | ◎ | |
| 1-16 | 7 | 20 | 11 | 9 | 0 | ○ | |
| 1-17 | 7 | 17 | 0 | 9 | 8 | ◎ | |
| 2-1 | 8 | 15 | 12 | 3 | 0 | ○ | |
| 2-2 | 8 | 15 | 0 | 3 | 12 | ○ | |
| 2-3 | 8 | 20 | 19 | 1 | 0 | ○ | |
| 2-4 | 8 | 20 | 0 | 1 | 19 | ◎ | |
| 2-5 | 8 | 20 | 17 | 3 | 0 | ◎ | |
| 2-6 | 8 | 17 | 0 | 3 | 14 | ◎ | |
| 2-7 | 8 | 20 | 15 | 5 | 0 | ◎ | |
| 2-8 | 8 | 17 | 0 | 5 | 12 | ◎ | |
| 2-9 | 8 | 20 | 13 | 7 | 0 | ◎ | |
| 2-10 | 8 | 17 | 0 | 7 | 10 | ◎ | |
| 2-11 | 8 | 20 | 11 | 9 | 0 | ◎ | |
| 2-12 | 8 | 17 | 0 | 9 | 8 | ◎ | |

It is noted from Table 7 that the erythritol-containing alcoholic soft sherbet or soft ice-like frozen alcoholic beverage has moderate sweetness and desirable freeze hardness (with erythritol not crystallized) if the alcohol concentration is over 6 vol% and not more than 8 vol% under the following condition.

That is, the content of erythritol is not less than 1 wt% and less than 10 wt% (without xylitol) and the total amount of saccharides is 15-20 wt%, or the content of erythritol is not less than 1 wt% and less than 10 wt%, the content of xylitol is 4-20 wt%, and the total amount of saccharides is 15-20 wt%. When these conditions are fulfilled, the objective erythritol-containing alcoholic soft sherbet or soft-ice like frozen alcoholic beverage is obtained.

Experiment Example 5

In a fixed amount of water were dissolved white rum (as an alcoholic ingredient, in an alcohol concentration of 6 vol% or 8 vol%), 15 wt% of high fructose corn syrup, 5 wt% of erythritol (from Nikken Chemicals Co., Ltd.), 4 vol% of lemon juice, and carrageenan or xanthane gum (as a thickening stabilizer) in a varied ratio as shown in Table 8. The solution was stirred and mixed, and frozen in a freezer at -20°C for 9 hours. Thus there was obtained an erythritol-containing alcoholic soft sherbet or a frozen alcoholic beverage (frozen cocktail).

Evaluations on freeze hardness and observation results of the thus obtained frozen alcoholic beverage are shown in Table 8. In Table 8, the alcoholic ingredient is expressed in terms of ethanol concentration contained generally in drink. The evaluation of freeze hardness was based on a scale of three states according to the following criteria.

○ : small variation
△ : large variation
X : excessively high viscosity due to thickening stabilizer

Table 8

| (Experiment Example 5) | | | | | |
|---|---|---|---|---|---|
| Run-No. | Alcohol concentration | Thickening stabilizer (%) | | Freeze hardness | |
| | | Name | Amount(%) | g | Evaluation |
| 1-1 | 6 | Carrageenan | 0 | 220~800 | △ |
| 1-2 | 6 | -ditto- | 0.01 | 200~600 | △ |
| 1-3 | 6 | -ditto- | 0.02 | 190~370 | ○ |
| 1-4 | 6 | -ditto- | 0.05 | 170~330 | ○ |
| 1-5 | 6 | -ditto- | 0.08 | 200~350 | ○ |
| 1-6 | 6 | -ditto- | 0.1 | 180~360 | ○ |
| 1-7 | 6 | -ditto- | 0.15 | 200~370 | ○ |
| 1-8 | 6 | -ditto- | 0.2 | viscous | X |
| 1-9 | 8 | -ditto- | 0 | 80~600 | △ |
| 1-10 | 8 | -ditto- | 0.01 | 100~530 | △ |
| 1-11 | 8 | -ditto- | 0.02 | 120~280 | ○ |
| 1-12 | 8 | -ditto- | 0.05 | 90~260 | ○ |
| 1-13 | 8 | -ditto- | 0.08 | 100~250 | ○ |
| 1-14 | 8 | -ditto- | 0.1 | 130~300 | ○ |
| 1-15 | 8 | -ditto- | 0.15 | 120~280 | ○ |
| 1-16 | 8 | -ditto- | 0.2 | too viscous | X |
| 2-1 | 6 | Xanthane gum | 0 | 220~800 | △ |
| 2-2 | 6 | -ditto- | 0.01 | 190~550 | △ |
| 2-3 | 6 | -ditto- | 0.02 | 180~340 | ○ |
| 2-4 | 6 | -ditto- | 0.05 | 160-350 | ○ |
| 2-5 | 6 | -ditto- | 0.08 | 150~350 | ○ |
| 2-6 | 6 | -ditto- | 0.1 | 180~360 | ○ |
| 2-7 | 6 | -ditto- | 0.15 | 170~380 | ○ |
| 2-8 | 6 | -ditto- | 0.2 | too viscous | X |

It is noted from Table 8 that the thickening stabilizer added in an amount of 0.02-0.15 wt% contributes to the desired freeze hardness.

Experiment Example 6

In a fixed amount of water were dissolved white rum (as an alcoholic ingredient, in an alcoholic concentration of 8 vol%), 15 wt% of high fructose corn syrup, 5 wt% of erythritol (from Nikken Chemicals Co., Ltd.), 4 vol% of lemon juice, and 0.08 wt% of any one of guar gum, locust bean gum, and tamarind gum (as a thickening stabilizer). After stirring and mixing, the solution was frozen in a freezer at -20°C for 9 hours. Thus there was obtained an erythritol-containing alcoholic soft sherbet or a frozen alcoholic beverage (frozen cocktail).
The thus obtained erythritol-containing alcoholic soft sherbet or frozen alcoholic beverage was found to have freeze hardness of 100-300 g.
It is apparent that gums such as guar gum, locust bean gum, and tamarind gum also contribute to freeze stabilization.

Experiment Example 7

Of the erythritol-containing alcoholic soft sherbets or soft ice-like frozen alcoholic beverage obtained in Experiment Examples 1 to 6 according to the present invention, some typical ones were selected for measurement of their calorific values. The measured calorific values were compared with those of the samples which contain high fructose corn syrup alone as the saccharide to calculate reduction in calorific value. Reducing effect in calorific value by erythritol and xylitol was examined. The results are shown in Table 9.

The calorific value of each erythritol-containing alcoholic soft sherbet or frozen alcoholic beverage was measured by summing up the calorific value of alcohol and the calorific value of saccharides.

The calorific value of alcohol was obtained from the formula below according to the Food Composition Table, version 4.

$$\text{Amount of alcohol (g)} = (0.794/\text{s.g. of product}) \times \text{alcohol concentration}$$

Calorific value of alcohol (g) was calculated by multiplying the obtained amount of alcohol (g) by 6.93 (conversion coefficient).

In the above calculations, the specific gravity of the product (erythritol-containing alcoholic soft sherbet or frozen alcoholic beverage) is regarded as 1.0 for convenience although it exceeds 1.0 when the solution contains saccharides.

The results of calculations indicate that the calorific value is 22 kcal/100 g for 4 vol% alcohol, 33 kcal/100 g for 6 vol% alcohol, 38.5 kcal/100 g for 7 vol% alcohol, 44 kcal/100 g for 8 vol% alcohol, and 55 kcal/100 g for 10 vol% alcohol.

On the other hand, the calorific value of saccharides was calculated from their respective concentrations in each example assuming that the high fructose corn syrup has 4 kcal/g, erythritol has 0 kcal/g, and xylitol has 2 kcal/g.

Table 9   (Experiment Example 7)

| Run No. | Alcohol concentration (%) | Total amount of saccharides (%) | High fructose corn syrup (%) | Erythritol (%) | Xylitol (%) | Calorific value (kcal) | Reduction (%) |
|---|---|---|---|---|---|---|---|
| 1-1 | 4 | 15 | 15 | 0 | 0 | 82 | — |
| 1-2 | 4 | 15 | 6 | 9 | 0 | 46 | 44 |
| 1-3 | 4 | 20 | 20 | 0 | 0 | 102 | — |
| 1-4 | 4 | 20 | 11 | 9 | 0 | 66 | 35 |
| 1-5 | 4 | 20 | 0 | 9 | 11 | 44 | 57 |
| 2-1 | 6 | 15 | 15 | 0 | 0 | 93 | — |
| 2-2 | 6 | 15 | 6 | 9 | 0 | 57 | 39 |
| 2-3 | 6 | 20 | 20 | 0 | 0 | 113 | — |
| 2-4 | 6 | 20 | 11 | 9 | 0 | 77 | 32 |
| 3-1 | 7 | 15 | 15 | 0 | 0 | 98.5 | — |
| 3-2 | 7 | 15 | 6 | 9 | 0 | 62.5 | 36 |
| 3-3 | 7 | 17 | 0 | 0 | 0 | 106.5 | — |
| 3-4 | 7 | 17 | 0 | 9 | 8 | 54.5 | 51 |
| 3-5 | 7 | 20 | 20 | 0 | 0 | 118.5 | — |
| 3-6 | 7 | 20 | 11 | 9 | 0 | 825 | 30 |
| 4-1 | 8 | 15 | 15 | 0 | 0 | 104 | — |
| 4-2 | 8 | 15 | 6 | 9 | 0 | 68 | 35 |
| 4-3 | 8 | 17 | 17 | 0 | 0 | 112 | — |
| 4-4 | 8 | 17 | 0 | 9 | 8 | 60 | 46 |
| 4-5 | 8 | 20 | 20 | 0 | 0 | 124 | — |
| 4-6 | 8 | 20 | 0 | 1 | 19 | 82 | 34 |

It is noted from Table 9 that the frozen alcoholic beverage containing erythritol alone or in combination with xylitol is lower in calorific value by about 30-50% than those products containing high fructose corn syrup (which is commonly used for beverages) even if the total amount of saccharides therein is the same.

In other words, it has been proven that it is possible to make the calorific value low by using a lot of erythritol and/or xylitol as the sweetener of the erythritol-containing alcoholic soft sherbet or frozen alcoholic beverage.

Comparative Experiment Example

For the purpose of comparison, four kinds of commercial frozen cocktails were examined for alcohol concentration, saccharide concentration, freeze hardness, and calorific value. The results are shown in Table 10. Calorific values in Table 10 were evaluated according to the same criteria as in Table 4.

Table 10

| (Comparative Experiment Example) | | | | |
|---|---|---|---|---|
| | Alcohol concentration(%) | Saccharide concentration (%) | Freeze hardness | Calorific value (kcal) |
| Sample No. 1 Sherbet dessert | 4 | 17.3 | X | 91.2 |
| Sample No. 2 Strawberry Daiquiri | 8 | 27.3 | ◎ | 153.2 |
| Sample No. 3 Melon Daiquiri | 8 | 27.9 | ◎ | 155.6 |
| Sample No. 4 Margarita | 10 | 23.4 | ◎ | 148.6 |

The following is apparent from Table 10.

Sample No. 1 has an adequate alcohol concentration (4 vol%) but is poor in freeze hardness (no less than 1000 g). Samples Nos. 2 and 3 have an adequate alcohol concentration (8 vol%) and are good in freeze hardness but have an excessive sweetness because of the total saccharide concentration not less than 27%. Sample No. 4 is good in both saccharide concentration and freeze hardness but undesirably has an excessively high alcohol concentration of 10 vol%.

These commercial samples have a calorific value of about 150 kcal/g if their alcohol concentration is about 8 vol%. By contrast, the erythritol-containing alcoholic soft sherbet or frozen alcoholic beverage according to the present invention has a calorific value of 70-90 kcal/g if its alcohol concentration is about 8 vol%. The calorific value of the present invention is lower than that of the commercial one by about 40-50%.

Therefore, the erythritol-containing alcoholic soft sherbet or erythritol-containing soft ice-like alcoholic beverage obtained in Experiment Examples according to the second aspect of the present invention is lower than those commercial products in calorific value, saccharide concentration, and sweetness although its freeze hardness is the same with or more than that of commercial products.

The erythritol-containing alcoholic soft sherbet or erythritol-containing soft ice-like alcoholic beverage according to the second aspect of the present invention has low freeze hardness and is soft ice-like product.

The erythritol-containing alcoholic soft sherbet or erythritol-containing soft ice-like alcoholic beverage according to the second aspect of the present invention retains its soft ice state for a while after it has been taken out of the freezer.

Also, the erythritol-containing alcoholic soft sherbet or erythritol-containing soft ice-like alcoholic beverage according to the second aspect of the present invention has a lower calorific value compared with commercial products containing saccharides such as sucrose, because it is incorporated with erythritol which is a sugar alcohol having a low calorific value. Further, it will be available in the sugarless form to meet the demands of the times.

That is, the product has almost the same alcohol concentration (4-8 vol%) as commercial products, a lower calorific value, a lower sugar content, and a low degree of sweetness, and yet it has low freeze hardness and is soft ice-like product because it is incorporated with erythritol as a sugar alcohol.

Moreover, the process according to the second aspect of the present invention permits easy production of said erythritol-containing alcoholic soft sherbet or erythritol-containing soft ice-like alcoholic beverage in the freezing compartment of a home refrigerator without necessity for complex steps. In other words, the process according to the second aspect of the present invention permits one to make the erythritol-containing alcoholic soft sherbet or erythritol-containing soft ice-like alcoholic beverage by simple ordinary freezing treatment.

Industrial Applicability

The present invention provides an erythritol-containing sherbet having a low calorific value and a soft mouthfeel and also provides a process for making it. Therefore, it is useful for the frozen confectionary industry.

**Claims**

1. A sherbet which contains erythritol and has a soft mouthfeel.

2. The sherbet as defined in Claim 1, characterized in that it contains erythritol and a foam stabilizer, and characterized in that the overrun is 50-130%.

3. The sherbet as defined in Claim 1, characterized in that it contains erythritol, a foam stabilizer, and at least one member selected from the group consisting of sugar, sugar alcohol, and polydextrose, and characterized in that the overrun is 50-130%.

4. The sherbet as defined in Claim 2, wherein the overrun is 60-110% and the foam stabilizer is gelatin or pectin.

5. The sherbet as defined in Claim 3, wherein the overrun is 60-110% and the foam stabilizer is gelatin or pectin.

6. The sherbet as defined in Claim 3, wherein the overrun is 50-90% and the foam stabilizer is egg white.

7. The sherbet as defined in Claim 5 or 6, wherein the sugar is sucrose.

8. The sherbet as defined in Claim 5 or 6, wherein the sugar alcohol is lactitol.

9. The sherbet as defined in Claim 5 or 6, wherein the content of erythritol is not less than 50 wt% and less than 100 wt% of the total amount of erythritol and at least one member selected from the group consisting of sugar, sugar alcohol, and polydextrose.

10. The sherbet as defined in any one of Claims 1 to 9, further comprising alcohol.

11. A process for producing sherbet, characterized by comprising: preparing a sherbet mix from water, erythritol, and gelatin or pectin as a foam stabilizer; and stirring it with cooling, thereby crystallizing ice crystals, while whipping air into syrup until the overrun reaches 60-110%.

12. The process for producing sherbet as defined in Claim 11, wherein the sherbet mix is further incorporated with at least one member selected from the group consisting of sugar, sugar alcohol, and polydextrose.

13. The process for producing sherbet as defined in Claim 11 or 12, wherein the sherbet mix is further incorporated with alcohol.

14. The process for producing sherbet as defined in any one of Claims 11 to 13, wherein the amount of gelatin is in the range of 0.4-1 vol% of the sherbet mix.

15. The process for producing sherbet as defined in any one of Claims 11 to 13, wherein the amount of pectin is in the range of 1-3 vol% of the sherbet mix.

16. A process for producing sherbet characterized by comprising: preparing a sherbet mix from water, erythritol, at least one member selected from the group consisting of sugar, sugar alcohol, and polydextrose, and egg white as a foam stabilizer; and stirring it with cooling, thereby crystallizing ice crystals, while whipping air into syrup until the overrun reaches 50-90%.

17. The process for producing sherbet as defined in Claim 16, wherein the sherbet mix is further incorporated with alcohol.

18. The sherbet as defined in Claim 1 which is an alcoholic sherbet containing alcohol in an amount not less than 1 vol% and not more than 18 vol%.

19. The sherbet as defined in Claim 18, wherein the total amount of saccharides is not more than 30 wt%.

20. A sherbet, comprising: alcohol in an amount of 4-8 vol%; and at least erythritol as a sugar alcohol, wherein the total amount of saccharides is 15-25 wt%.

21. A sherbet, comprising: alcohol in an amount of 4-8 vol%; erythritol in an amount not less than 1 wt%; and less than 10 wt% and xylitol in an amount of 0-23 wt%, wherein the total amount of saccharides is 20-25 wt%.

22. A sherbet, comprising: alcohol in an amount over 6 vol% and less than 8 vol%; erythritol in an amount not less than 1 wt% and less than 10 wt%; and xylitol in an amount of 0-20wt%, wherein the total amount of saccharides is 15-20 wt%.

23. The sherbet as defined in any one of Claims 18 to 22, comprising a thickening stabilizer in an amount of 0.02-0.15 wt%, said thickening stabilizer being at least one member selected from the group consisting of xanthane gum, carrageenan, guar gum, locust bean gum, tamarind gum, and gum arabic.

24. The process for the production of sherbet as defined in any one of Claims 18 to 23, characterized in that an alcoholic ingredient and erythritol alone or in combination with xylitol are stirred and mixed together and subsequently the resulting mixture is frozen.

25. The process for the production of sherbet as defined in any one of Claims 18 to 23, characterized in that an alcoholic ingredient, erythritol alone or in combination with xylitol, and a saccharide other than erythritol and xylitol are stirred and mixed together and subsequently the resulting mixture is frozen.

26. The process for the production of sherbet as defined in any one of Claims 18 to 23, characterized in that an alcoholic ingredient, erythritol alone or in combination with xylitol, a saccharide other than erythritol and xylitol, and a thickening stabilizer are stirred and mixed together, and subsequently the resulting mixture is frozen.

27. The process for the production of sherbet as defined in any one of Claims 18 to 23, characterized in that an alcoholic ingredient, erythritol alone or in combination with xylitol, and a thickening stabilizer are stirred and mixed together, and subsequently the resulting mixture is frozen.

28. A solution as a raw material from which the sherbet defined in any one of Claims 18 to 23 is produced, said solution being composed of an alcohol ingredient and erythritol alone or in combination with xylitol.

29. A solution as a raw material from which the sherbet defined in any one of Claims 18 to 23 is produced, said solution being composed of an alcohol ingredient, erythritol alone or in combination with xylitol, and a saccharide other than erythritol and xylitol.

30. A solution as a raw material from which the sherbet defined in any one of Claims 18 to 23 is produced, said solution being composed of an alcohol ingredient, erythritol alone or in combination with xylitol, a saccharide other than erythritol and xylitol, and a thickening stabilizer.

31. A solution as a raw material from which the sherbet defined in any one of Claims 18 to 23 is produced, said solution being composed of an alcohol ingredient, erythritol alone or in combination with xylitol, and a thickening stabilizer.

**INTERNATIONAL SEARCH REPORT**

| International application No. |
| --- |
| PCT/JP97/03738 |

| A. CLASSIFICATION OF SUBJECT MATTER |
| --- |
| Int. Cl$^6$ A23G9/00 |
| According to International Patent Classification (IPC) or to both national classification and IPC |

| B. FIELDS SEARCHED |
| --- |
| Minimum documentation searched (classification system followed by classification symbols) |
| Int. Cl$^6$ A23G9/00 |
| Documentation searched other than minimum documentation to the extent that such documents are included in the fields searched |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP, 59-102359, A (Otsuka Pharmaceutical Co., Ltd.),<br>June 13, 1984 (13. 06. 84)<br>& EP, 127686, A & WO, 8402256, A | 1<br>2 - 31 |
| Y | JP, 49-134874, A (Kanebo, Ltd.),<br>December 25, 1974 (25. 12. 74)(Family: none) | 2 - 17 |
| Y | JP, 4-8252, A (Snow Brand Milk Products Co., Ltd., Fanshi Aisu K.K.),<br>January 13, 1992 (13. 01. 92)(Family: none) | 10, 13-15,<br>17-31 |
| Y | JP, 5-260945, A (Nagatanien Co., Ltd.),<br>October 12, 1993 (12. 10. 93)(Family: none) | 10, 13-15,<br>17-31 |
| Y | JP, 6-70689, A (Kanebo, Ltd.),<br>March 15, 1994 (15. 03. 94)(Family: none) | 2-17, 23-31 |
| Y | JP, 7-132048, A (Nisshin Sugar Mfg. Co., Ltd.),<br>May 23, 1995 (23. 05. 95)(Family: none) | 2-5, 7-15,<br>23-31 |

| [X] Further documents are listed in the continuation of Box C. | [ ] See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| November 6, 1997 (06. 11. 97) | November 18, 1997 (18. 11. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP97/03738 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP, 61-100160, A (Best F K.K., Daiei shokuhin Kogyo K.K., Daiei Yakuhin Kogyo K.K., Shigeo Amano, Yoshio Toshigai), May 19, 1986 (19. 05. 86) (Family: none) | 1 - 31 |
| A | JP, 57-91156, A (Sato Shokuhin Kogyo K.K.), June 7, 1982 (07. 06. 82) (Family: none) | 1 - 31 |
| A | JP, 46-40193, B (Ezaki Gulico Co., Ltd.), November 27, 1971 (27. 11. 71) (Family: none) | 1 - 31 |

Form PCT/ISA/210 (continuation of second sheet) (July 1992)